# EUROPEAN PATENT APPLICATION

(11) **EP 4 310 762 A1**
(43) Date of publication of application: **24.01.2024**
(21) Application number: 23175179.3
(22) Date of filing: 24.05.2023
(51) Int. Cl.: G06Q 30/0238, G06Q 30/0207

(54) **DISPLAY SYSTEM, SERVER DEVICE, AND DISPLAY DEVICE**

(30) Priority: 20.07.2022 JP 2022115532
(71) Applicant: Toshiba TEC Kabushiki Kaisha, Tokyo 141-8562 (JP)
(72) Inventor: Marumo, Nobuyuki, Shinagawa-ku, 141-8562 (JP)
(74) Representative: Bandpay & Greuter

(57) **Abstract**

A display system includes display devices each associated with an area for displaying a commodity, and a server including: an interface communicating with the devices and a terminal operated by a customer, a memory storing commodity codes of commodities, each in association with any coupon applicable to the corresponding commodity, and customer IDs of customers, each in association with any coupon issued thereto, and a processor: acquiring a first customer ID and first information from a first terminal, the first information indicating a current position thereof, determining a first area corresponding to the position, determining that a first coupon is associated with the first customer ID and applicable to a first commodity displayed in the first area, and control the interface to transmit a first command indicating the first commodity, causing a first display device in the first area to display information related to the first commodity.

## Description

### FIELD

Embodiments described herein relate generally to a display system, a server device, and a display device.

### BACKGROUND

Conventionally, for the purpose of sales promotion, coupons are issued by stores and businesses (hereinafter collectively referred to as "stores") that sell commodities and provide services. For example, the store issues a paper receipt including a coupon on which the content of the coupon is printed to the customer. Further, the store issues via e-mail a digital coupon to the customer who has registered his or her email address.

In addition, a system for notifying a customer in a sales floor of a target commodity to which a coupon is applicable is known. For example, a system has been proposed in which a customer who has approached a target commodity of an available coupon is notified through the tablet terminal installed on the shopping cart used by the customer, indicating that a commodity near the customer is the target commodity of the coupon. The tablet terminal displays the notification on its screen.

However, since customers move inside the store while looking around displayed commodities, it is easy to overlook the notification displayed on the tablet terminal. As a result, the customers lose the chance to use their coupons. Therefore, improvement of the system is desired such that the issued coupons are effectively used by the customers in the store.

### SUMMARY OF THE INVENTION

Embodiments of the present invention provide an information processing apparatus, a display system, and a display device that enable an issued coupon to be effectively utilized.

A display system for displaying commodity information for a customer in a store, includes a plurality of display devices installed in the store and each associated with one of a plurality of areas in which commodities are displayed for purchase; and a server device including: a communication interface configured to communicate with the display devices and a terminal device operated by a customer in the store, a memory that stores: commodity codes of commodities, each in association with any coupon applicable to the corresponding commodity, and customer IDs of customers of the store, each in association with any coupon that has been issued thereto, and a processor configured to: acquire a first customer ID and first information from a first terminal device, the first information indicating a current position of the first terminal device in the store, determine a first area corresponding to the current position of the first terminal device, determine that a first coupon is associated with the first customer ID and applicable to a first commodity displayed in the first area, and control the communication interface to transmit to a first display device associated with the first area, a first command indicating the first commodity, wherein the first command causes the first display device to display first commodity information related to the first commodity.

To this end, there is provided a display system, a server and a display device according to the appended claims.

### BRIEF DESCRIPTION OF THE DRAWINGS

FIG. 1 is a schematic diagram of a store system including a display system according to a first embodiment.
FIG. 2 is a hardware block diagram of a server device according to the first embodiment.
FIG. 3 depicts a data structure of a customer master file stored in the server device.
FIG. 4 depicts a data structure of a coupon master file stored in the server device.
FIG. 5 depicts a data structure of a customer information management file stored in the server device.
FIG. 6 depicts a data structure of an area management file stored in the server device.
FIG. 7 depicts a data structure of a beacon management file stored in the server device.
FIG. 8 depicts a plurality of display areas for displaying commodities in a store.
FIG. 9 is a functional block diagram of the server device.
FIG. 10 is a hardware block diagram of a display device according to the first embodiment.
FIG. 11 depicts a data structure of a commodity information management file stored in the display device.
FIG. 12 is a diagram illustrating a display of the display device.
FIG. 13 is a functional block diagram of the display device.
FIG. 14 is a hardware block diagram of a terminal device according to the first embodiment.
FIG. 15 is a functional block diagram of the terminal device.
FIG. 16 is a sequence chart of operations of the store system.
FIG. 17 is a flowchart of a display device selection process performed by the server device.
FIG. 18 is a flowchart of a display switching process performed by the display device.
FIG. 19 is a hardware block diagram of a display device according to a second embodiment.
FIG. 20 depicts a data structure of a target coupon management file stored in the display device according to the second embodiment.
FIG. 21 is a functional block diagram of the display device according to the second embodiment.
FIG. 22 is a hardware block diagram of a terminal device according to the second embodiment.
FIG. 23 is a functional block diagram of the terminal device according to the second embodiment.
FIG. 24 is a sequence chart of the operations of the display system according to the second embodiment.
FIG. 25 is a flowchart of a display switching process performed by the display device according to the second embodiment.

### DETAILED DESCRIPTION

Hereinafter, embodiments will be described in detail with reference to the drawings. The present invention is not limited to the embodiments described below.

For example, in the embodiments described below, an example in which an information processing apparatus is applied to a server device will be described, but the information processing apparatus may be applied to a display device. In the embodiment described below, an example in which a smartphone owned by a customer is used as a terminal device is described, but the terminal device may be a tablet terminal prepared by a store or the like.

### First Embodiment

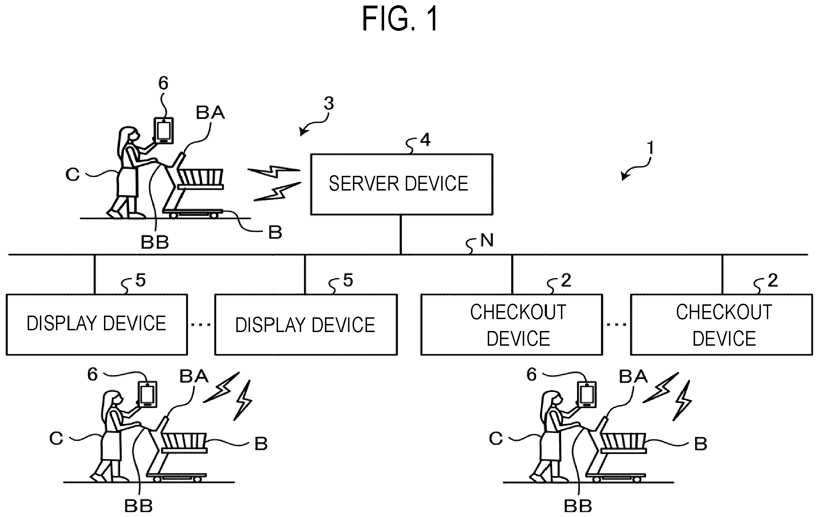

Hereinafter, an information processing apparatus, a display system, and a display device according to a first embodiment will be described with reference to the drawings. FIG. 1 is a schematic diagram of a store system 1 including a display system 3. The store system 1 of the present embodiment is applied to, for example, a store that sells commodities such as a grocery store. The store system 1 includes a plurality of checkout devices 2 and the display system 3.

The display system 3 includes a server device 4, a plurality of display devices 5 provided in a sales floor in the store, and a terminal device 6 operated by a customer C. The checkout device 2, the server device 4, and each display device 5 are communicably connected to each other via a network N such as a Local Area Network (LAN). When a shopping application program (hereinafter, also referred to as "shopping application") is activated, the terminal device 6 is communicably connected to the checkout device 2, the server device 4, and the display device 5 via a wireless LAN or the like. In addition, when the shopping application is activated, the terminal device 6 can communicate with a plurality of beacon devices (not shown) provided in the sales floor by short-range wireless communication. The beacon device is for detecting the position of the customer C, and is provided in each of predetermined areas in the sales floor.

The checkout device 2 is, for example, a so-called self-service checkout device in which the customer C performs a payment operation by himself/herself. The checkout device 2 executes a checkout process related to payment by cash payment or cashless payment such as credit card payment based on checkout information received from the terminal device 6. The checkout process is for paying a price for commodities purchased by the customer C. The checkout device 2 can execute the checkout process using a coupon issued to the customer C.

The checkout device 2 transmits transaction information related to the executed transaction to the server device 4. The transaction information includes customer identification information for identifying the customer C, commodity information of the purchased commodity, coupon information, total amount, and the like. The customer identification information is, for example, a member ID assigned to the customer C who uses the shopping application. The coupon information indicates a coupon code for specifying a coupon that has been used in the transaction and a coupon code printed on a receipt that has been issued in the transaction. In other words, the checkout device 2 transmits the coupon code of the coupon that has been used by the customer C and the coupon code of the coupon newly issued to the customer C to the server device 4. Note that the checkout device 2 may be a Point Of Sales (POS) terminal or the like operated by a sales clerk.

The server device 4 functions as a store server that manages various kinds of information of the store. The server device 4 receives transaction information from each of the checkout devices 2. The server device 4 manages the transaction information received from each of the checkout devices 2 for each of the customers C. Further, the server device 4 acquires the coupon code of a digital coupon issued by an external coupon server (not shown) to the customer C. Further, the server device 4 acquires the coupon code of the paper coupon issued to the customer C from each of the checkout devices 2. Further, the server device 4 acquires the coupon code of the coupon used by the customer C in the transaction from each of the checkout devices 2. The server device 4 manages the coupon code of the coupon issued to the customer C, that is, the coupon code of the coupon available to the customer C, based on the acquired coupon code. Further, the server device 4 stores a commodity master file in which commodity codes and commodity information (e.g., commodity name, price, and the like) are associated with each other with respect to the commodities handled in the store, and transmits a copy of the commodity master file to the terminal device 6 as appropriate.

The server device 4 acquires the positional information of the customer C in the sales floor. For example, the server device 4 acquires a beacon ID from the terminal device 6 of the customer C as the positional information. The server device 4 recognizes the position of the customer C by referring to a beacon management file in which the beacon IDs and area information of the sales floor are associated with each other. The area information indicates a plurality of partitioned display areas in the sales floor. Each display area displays a different commodity, and thus is associated with the displayed commodity. Note that the server device 4 may acquire the positional information of the customer C by using a Global Positioning System (GPS) technique or the like.

The server device 4 controls the items displayed by the display device 5. Specifically, when the customer C is in the display area of a target commodity of a coupon available to the customer C, the server device 4 outputs a display change instruction or command to the display device 5 associated with the display area. In the following description, the target commodity of a coupon that can be used by the customer C may be referred to as the "coupon target commodity". When receiving the display change instruction, the display device 5 displays a message indicating that the commodity displayed in the corresponding display area is the coupon target commodity. In addition, when the customer C is in the display area of the coupon target commodity, the server device 4 outputs a vibration instruction or command to the terminal device 6. Upon receiving the vibration instruction, the terminal device 6 operates the built-in vibrator.

Each display device 5 is arranged in a store in association with the corresponding display area for displaying a commodity. The display device 5 displays, for example, information on the commodity displayed in the associated display area. The display device 5 is desirably installed in the associated display area, but it is only necessary that the customer C located in the display area can recognize the displayed item, and the installation position is not limited. The display device 5 may not correspond to the display area on a one-to-one basis. For example, the plurality of display devices 5 may be associated with one display area, or a single display device 5 may be associated with a plurality of display areas. Since the commodity displayed in each display area is determined, it can be said that the display device 5 is associated with the commodity displayed. In the following description, a commodity displayed in a display area associated with the display device 5 may be referred to as a "commodity corresponding to the display device 5".

The display device 5 displays, for example, advertisement information in a normal time. The advertisement information may be an advertisement for the commodity corresponding to the display device 5, or an advertisement for a different commodity. Here, the normal time refers to a time other than when the display device 5 receives a display change instruction from the server device 4 and performs a display according to the display change instruction. The display device 5 changes the displayed item in accordance with the display change instruction from the server device 4. Specifically, upon receiving the display change instruction, the display device 5 displays information indicating that the commodity in the display area is the coupon target commodity for a predetermined time to the customer C in the display area. In this way, the customer C can recognize that the customer C has a coupon related to the commodity displayed in the display area in which the customer C is located.

Usually, the customer C moves in the sales floor while looking around the displayed commodity. According to the display system 3, the display device 5 installed in the display area notifies that the commodity displayed in the display area where the customer C is located is a coupon target commodity (hereinafter, also referred to as "coupon target commodity notification"). Thus, the customer C can recognize that there is a commodity displayed nearby and to which his or her coupon is applicable. In the present embodiment, the coupon target commodity notification is made by the display of the display device 5 and the vibration of the terminal device 6.

The display device 5 does not change the displayed item when the customer C in the display area corresponding to the display device does not have a coupon for the commodity displayed in the display area. This prevents the display device 5 from switching the display more than necessary and making it difficult for the customer C to recognize the displayed information. Note that the display device 5 may not display any information in its normal state, or may display any information other than the advertisement information. However, by displaying the advertisement information in the normal state, the display device 5 can be used for both the advertisement display and the coupon target commodity notification.

The terminal device 6 is, for example, a mobile device such as a smartphone operated by the customer C. The terminal device 6 can be held on the shopping cart B. The shopping cart B is placed in a sales floor of a store and is used for the customer C to carry a commodity to be purchased. The shopping cart B includes a holding unit BA and a handle BB. The holding unit BA holds the terminal device 6. The handle BB is a part gripped by the customer C in order to move the shopping cart B. The holding portion BA and the handle BB are connected to each other via a vibrating transmission member. When the terminal device 6 held by the holding unit BA vibrates, the vibration is transmitted to the handle BB. As a result, the customer C holding the handle BB can recognize that the terminal device 6 is vibrating.

The terminal device 6 operates a built-in vibrator in accordance with a vibration instruction from the server device 4. The terminal device 6 can perform coupon target commodity notification by transmitting vibration caused by the vibrator to the customer C.

The shopping application is installed in the terminal device 6. The terminal device 6 can execute the shopping application to register commodities in the store. Specifically, the terminal device 6 images a code symbol such as a barcode attached to a commodity (hereinafter, also referred to as a "commodity barcode") by an operation of the customer C, and reads the commodity code indicated by the commodity barcode. The commodity code is commodity identification information for identifying a commodity. The terminal device 6 acquires commodity information such as a commodity name and a price based on the read commodity code, and stores the commodity information in its storage device to perform commodity registration. Note that the terminal device 6 may read the commodity code by the general object recognition.

Next, each device constituting the display system 3 will be described in detail. First, the server device 4 will be described.

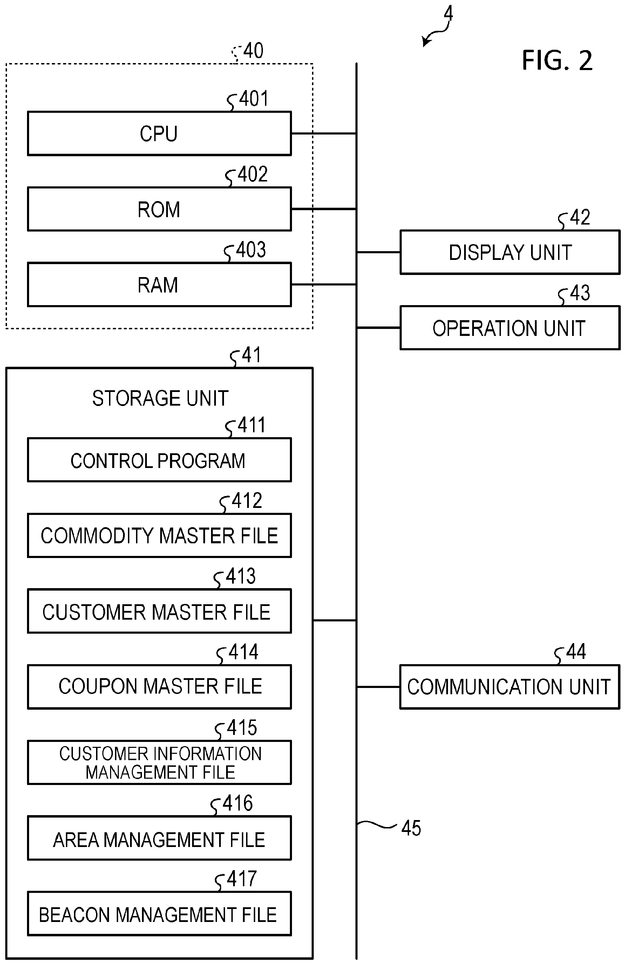

FIG. 2 is a hardware block diagram of the server device 4. The server device 4 includes a control unit 40, a storage unit 41, a display unit 42, an operation unit 43, and a communication unit 44. The control unit 40, the storage unit 41, the display unit 42, the operation unit 43, and the communication unit 44 are connected to each other via a bus 45 or the like.

The control unit 40 includes a computer including a Central Processing Unit (CPU) 401, Read Only Memory (ROM) 402, Random Access Memory (RAM) 403. The CPU 401, the ROM 402 and the RAM 403 are connected to each other via the bus 45.

The CPU 401 controls the entire operation of the server device 4. The ROM 402 stores various programs such as programs executed by the CPU 401 and various types of data. The RAM 403 is used as a work area of the CPU 401, and temporarily stores various programs and various data loaded from the ROM 402 and the storage unit 41. The control unit 40 or the CPU 401 executes various control processes of the server device 4 in accordance with a control program stored in the ROM 402 or the storage unit 41 and loaded onto the RAM 403.

The storage unit 41 is constituted by a storage medium such as a Hard Disk Drive (HDD) or a flash memory, and maintains data even if the power supply is cut off. The storage unit 41 stores a control program 411, a commodity master file 412, a customer master file 413, a coupon master file 414, a customer information management file 415, an area management file 416, and a beacon management file 417.

The control program 411 realizes a function of acquiring a member ID for identifying the customer C and positional information indicating the position of the customer C from the terminal device 6, a function of selecting coupons available to the customer C identified by the acquired member ID, a function of outputting a display change instruction for instructing the display device 5 to notify the coupon target commodity on the basis of the acquired member ID, the positional information, and the like.

The commodity master file 412 is a master file that stores information on commodities displayed and sold at a store. The commodity master file 412 stores commodity information such as a commodity name and a price in association with the commodity code. Note that the commodity displayed and sold in the store changes on a daily basis, and thus the commodity master 412 is appropriately updated. The updated commodity master file 412 is copied and distributed to each terminal device 6.

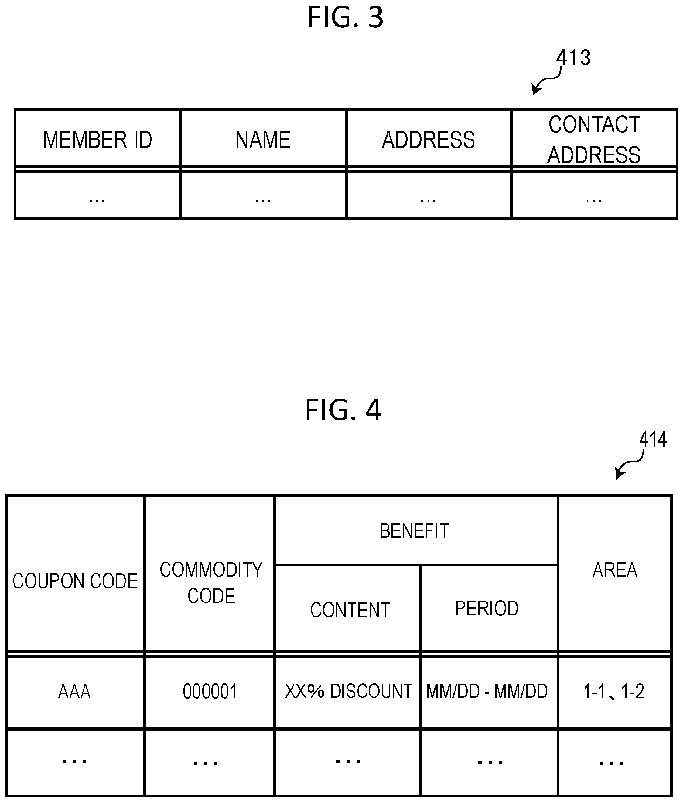

The customer master file 413 is a master file that stores information on customers C who have been registered as are frequent or loyal customers of the store. Each piece of information registered in the customer master file 413 is acquired from the customer C when the customer C installs the shopping app and is registered as a frequent or loyal customer. FIG. 3 depicts a data structure of the customer master file 413. The customer master file 413 stores a name, an address, and a contact address in association with the member ID.

The member ID is customer identification information for identifying the customer C. The membership ID is given by the store when the customer C completes registration. The contact address is, for example, an email address of the customer C using the terminal device 6. The server device 4 can transmit information to the terminal device 6 of the customer C by referring to the contact address.

The coupon master file 414 is a master file that manages coupons issued by stores. When the store issues a new coupon, the information is registered in the coupon master file 414. When the expiration date of the coupon registered in the coupon master file 414 has elapsed, the information related to the coupon is deleted from the coupon master file 414. In the present embodiment, the coupon master file 414 stores information on a digital coupon issued by a coupon server (not shown) and a paper coupon issued by the checkout device 2. FIG. 4 depicts a data structure of the coupon master file 414. The coupon master file 414 stores a coupon code in association with the commodity code of the coupon target commodity, the benefit, and the display area of the coupon target commodity.

The coupon code is information for identifying the issued coupon. The commodity code is a commodity code of the coupon target commodity. The coupon target commodity is a target commodity for which a benefit based on the coupon is obtained. The benefit is information indicating the content and period of the benefit by the coupon. The content indicates what benefit is provided by the coupon, and is, for example, information indicating a discount amount, a discount rate, granting of novelty goods, and the like. The period is information indicating a valid period in which the coupon is available. The area is information for identifying the display area in which the coupon target commodity is displayed in the store.

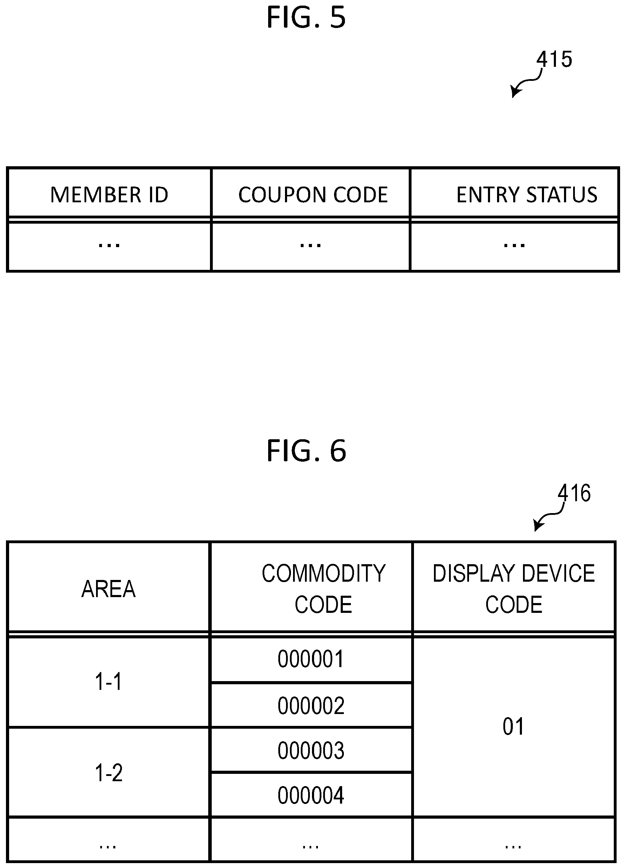

The customer information management file 415 manages customer information. The customer information management file 415 is appropriately updated in accordance with the issuance status of the coupon to the customer C, the usage status of the coupon by the customer C, and the positional information of the customer C. FIG. 5 depicts a data structure of the customer information management file 415. The customer information management file 415 stores the coupon code and the entry status in association with the member ID.

As described above, the member ID is used to identify each of the registered customers C. The coupon code is information for identifying a coupon available to the customer C of the corresponding member ID. The entry status is information indicating whether the customer C is present in the store.

The area management file 416 is a file for managing information of the display area. The information registered in the area management file 416 can vary depending on the stores. FIG. 6 depicts a data structure of the area management file 416. The area management file 416 stores commodity codes and display device codes in association with the areas. The area management file 416 may store information indicating the installation position of the display device 5 in association with the display device code.

As described above, the area field of the area management file 416 stores information for identifying a display area for displaying the commodity, and the commodity code is information for identifying the displayed commodity. The display device code is information for identifying the display device 5 installed in the sales floor.

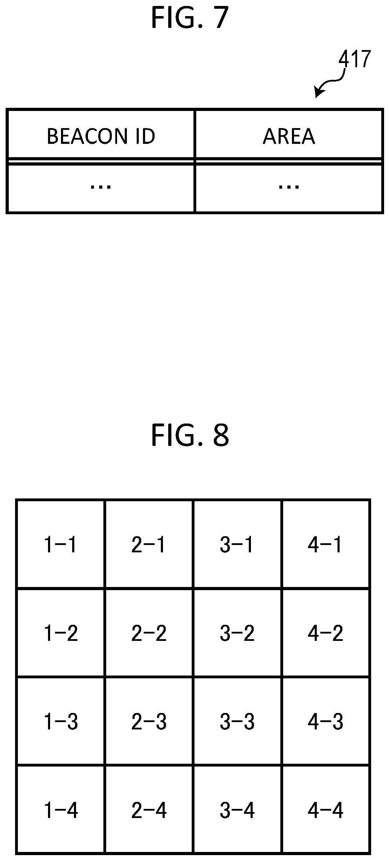

FIG. 8 is a diagram illustrating the display areas of a sales floor. In this example, 16 display areas from 1-1 to 4-4 are formed in the sales floor. In the case of the example of the area management file 416 in FIG. 6, the commodities having the commodity code 000001 and the commodity code 000002 are displayed in the display area 1-1. Similarly, in the display area 1-2, the commodities of the commodity code 000003 and the commodity code 000004 are displayed. In the area management file 416, three or more commodity codes may be associated with one area. In the area management file 416, one commodity code may be associated with the plurality of display areas.

In the case of the example of the area management file 416 in FIG. 6, the display device 5 of the code 01 is associated with the display area 1-1 and the display area 1-2. This means that the display device 5 of the code 01 displays information to the customer C located in the display area 1-1 and the display area 1-2. For example, the display device 5 of the code 01 is installed at the border between the display area of the code 1-1 and the display area of the code 1-2. In the area management file 416, a plurality of display device codes may be associated with one display area.

The beacon management file 417 manages a correspondence relationship between a beacon device and a display area arranged in the sales floor. FIG. 7 depicts a data structure of the beacon management file 417. The beacon management file 417 stores the beacon IDs and the areas in association with each other.

The beacon ID is used to identify a beacon device. The area indicates information for identifying the display area in which the beacon device is installed. The plurality of beacon IDs may be associated with one display area. The server device 4 can recognize the position of the terminal device 6 using the beacon ID received from the beacon device by the terminal device 6 in the short-range wireless communication. By recognizing the position of the terminal device 6, the server device 4 can recognize the display area in which the customer C carrying the terminal device 6 is located.

Returning to FIG. 2, the hardware of the server device 4 will be described.

The display unit 42 is a display that includes, for example, a liquid crystal panel, and displays various types of information. The display unit 42 displays, for example, information stored in the commodity master file 412, the customer master file 413, the coupon master file 414, the customer information management file 415, the area management file 416, and the beacon management file 417 as needed.

The operation unit 43 includes a keyboard, a touch panel, a mouse, and the like and inputs information to the control unit 40.

The communication unit 44 is an interface circuit for communicating with external devices such as the checkout device 2, the display device 5, and the terminal device 6. The control unit 40 is connected to an external device via the communication unit 44, so that information or data can be transmitted and received to and from the external device.

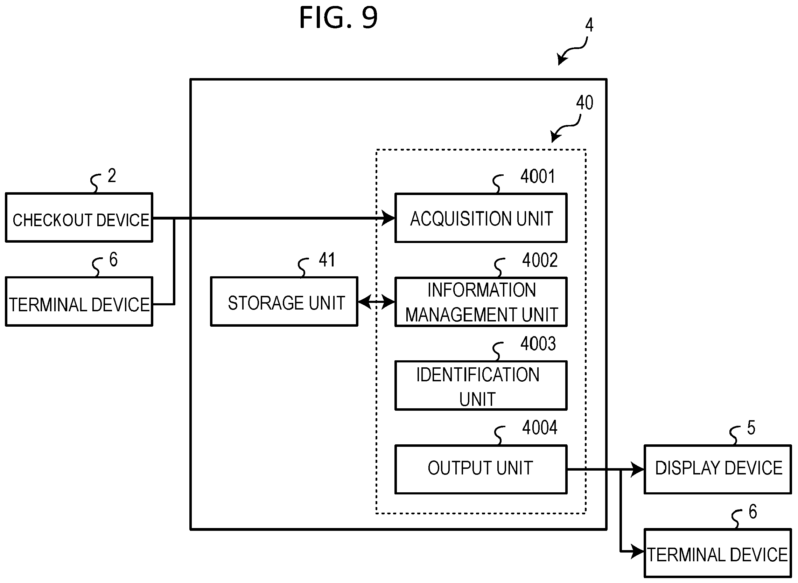

Next, the main functional configuration of the control unit 40 of the server device 4 will be described. FIG. 9 is a functional block diagram of the control unit 40 of the server device 4. The control unit 40 functions as an acquisition unit 4001, an information management unit 4002, an identification unit 4003, and an output unit 4004 when the CPU 401 executes the control program stored in the ROM 402 or the storage unit 41. One or more of these functions may be performed by hardware such as a dedicated circuit.

The acquisition unit 4001 acquires transaction information from the checkout device 2. The transaction information includes a coupon code of a coupon that has been used in the transaction. The transaction information includes coupon information of a coupon that has been issued in the transaction. The acquisition unit 4001 acquires a member ID from a coupon server (not shown) and the coupon code of the coupon issued to the customer C having the member ID.

The acquisition unit 4001 acquires the member ID and the beacon ID from the terminal device 6. That is, the acquisition unit 4001 acquires customer identification information for identifying a customer and customer positional information indicating the position of the customer.

The information management unit 4002 manages information stored in the storage unit 41. Here, managing information means storing information in the storage unit 41 or reading information from the storage unit 41 as necessary.

The information management unit 4002 updates the customer information management file 415 based on the transaction information acquired from the checkout device 2 by the acquisition unit 4001. Specifically, when the coupon code of the newly issued coupon is included in the transaction information, the information management unit 4002 adds the coupon code in association with the member ID included in the transaction information. When the coupon code of the coupon used in the transaction information is included, the information management unit 4002 deletes the coupon code from the coupon code stored in association with the member ID included in the transaction information. Further, the information management unit 4002 updates the customer information management file 415 based on the member ID and the coupon code received from the coupon server by the acquisition unit 4001.

When the acquisition unit 4001 acquires the member ID and the beacon ID, the information management unit 4002 reads the coupon code corresponding to the member ID acquired by the acquisition unit 4001 from the customer information management file 415. In other words, the information management unit 4002 selects a coupon that can be used by the customer C identified by the member ID acquired by the acquisition unit 4001. That is, the information management unit 4002 selects coupons available to the customer C. Further, the information management unit 4002 refers to the coupon master file 414 and selects a commodity code corresponding to the coupon code read from the customer information management file 415.

The identification unit 4003 specifies the display device 5 that performs the coupon target commodity notification among the plurality of display devices 5 based on the beacon ID acquired by the acquisition unit 4001 and the area information indicating the display area of the target commodity of the coupon selected by the information management unit 4002. Specifically, the identification unit 4003 refers to the beacon management file 417 and specifies area information corresponding to the beacon ID acquired by the acquisition unit 4001. In other words, the identification unit 4003 specifies the display area in which the customer C is located. Then, the identification unit 4003 refers to the coupon master file 414 and determines whether the specified area information is included in the area information corresponding to the coupon code selected by the information management unit 4002. In other words, it is determined whether the display area in which the customer C is located is a display area in which the coupon target commodity is displayed.

When the area information specified by the identification unit 4003 is included in the area information corresponding to the coupon code selected by the information management unit 4002 in the coupon master file 414, the identification unit 4003 refers to the area management file 416 and specifies the display device code corresponding to the area information specified by the identification unit 4003. In other words, when the display area in which the customer C is located is a display area in which the coupon target commodity is displayed, the identification unit 4003 specifies the display device 5 corresponding to the display area. The display device 5 specified by the identification unit 4003 is the transmission destination of the display change instruction.

The output unit 4004 controls the communication unit 44 to transmit the display change instruction to the display device 5 identified by the identification unit 4003. The display change instruction includes the commodity code selected by the information management unit 4002. Further, the output unit 4004 controls the communication unit 44 to transmit a vibration instruction to the terminal device 6. The vibration instruction indicates that the display device 5 has been specified by the identification unit 4003.

Next, the display device 5 will be described.

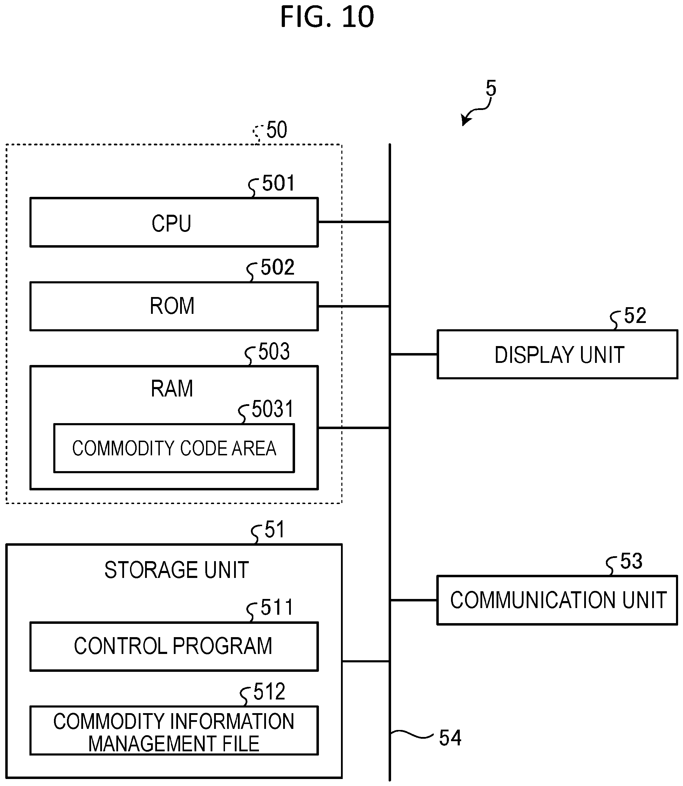

FIG. 10 is a hardware block diagram of the display device 5. The display device 5 includes a control unit 50, a storage unit 51, a display unit 52, and a communication unit 53. The control unit 50, the storage unit 51, the display unit 52, and the communication unit 53 are connected to each other via a bus 54 or the like.

The control unit 50 includes a CPU 501, a ROM 502, a RAM 503. The CPU 501, the ROM 502 and the RAM 503 are connected to each other via the bus 54.

The CPU 501 controls the entire operation of the display device 5. The ROM 502 stores various programs such as programs executed by the CPU 501 and various types of data. The RAM 503 is used as a work area of the CPU 501, and temporarily stores various programs and various data loaded from the ROM 502 and the storage unit 51. The control unit 50 or the CPU 501 executes various control processes of the display device 5 in accordance with a control program stored in the ROM 502 or the storage unit 51 and loaded onto the RAM 503.

Further, the RAM 503 includes a commodity code area 5031. The commodity code area 5031 stores the commodity code included in the display change instruction received from the server device 4.

The storage unit 51 is constituted by a storage medium such as an HDD or a flash memory, and maintains the stored data even if the power supply is cut off. The storage unit 51 stores a control program 511 and a commodity information management file 512.

The control program 511 is a program for performing a function of acquiring a display change instruction from the server device 4, a function of controlling the display unit 52 to display various kinds of information, and the like.

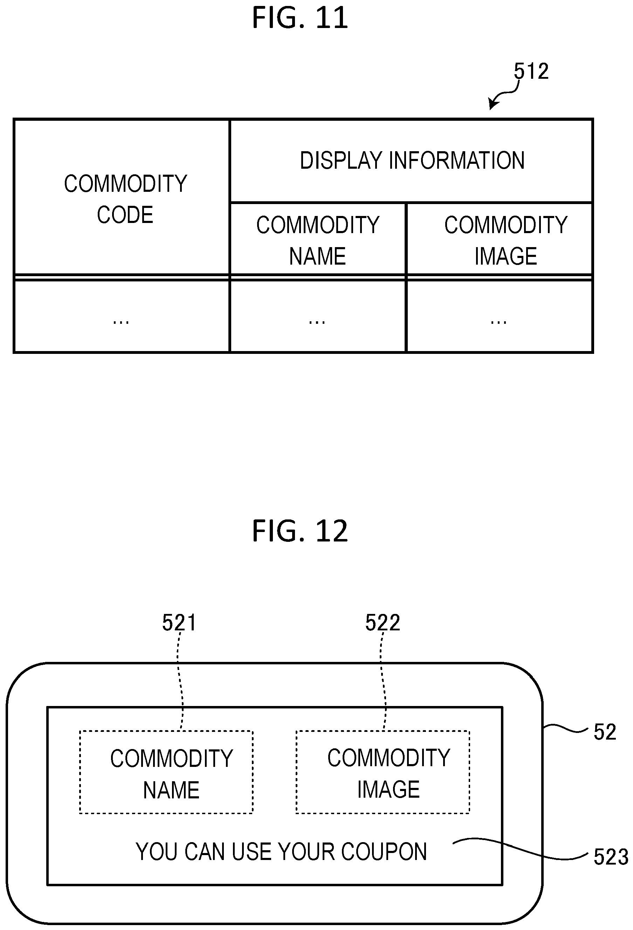

The commodity information management file 512 manages commodity information to be displayed on the display unit 52 when the display device 5 performs the coupon target commodity notification. The information registered in the commodity information management file 512 is set according to the commodity displayed in the display area associated with the display device 5. FIG. 11 depicts a data structure of the commodity information management file 512. The commodity information management file 512 stores display information in association with the commodity code.

As described above, the commodity code is commodity identification information for identifying a commodity. The display information includes a commodity name and a commodity image. The display information may include other commodity information such as a price.

Here, a display mode of the display unit 52 when the display device 5 receives a display change instruction from the server device 4 will be described. FIG. 12 is a diagram illustrating a screen displayed by the display unit 52 when the display device 5 receives a display change instruction from the server device 4. The screen includes a commodity name display area 521, a commodity image display area 522, and a notification display area 523.

The commodity name display area 521 displays a commodity name. The displayed commodity name is the name of the coupon target commodity located in the display area corresponding to the display device 5. The commodity image display area 522 displays the image of the coupon target commodity, and is a photo image, an illustration, or the like thereof. Upon receiving the display change instruction from the server device 4, the display device 5 refers to the commodity information management file 512, acquires the commodity name and the commodity image corresponding to the commodity code included in the display change instruction, and displays the acquired commodity name and the commodity image on the display unit 52.

The notification display area 523 displays information for notifying the customer C located in the display area corresponding to the display device 5 that the commodity displayed in the display area is the coupon target commodity. The notification display area 523 notifies, for example, a message such as "You can use your coupon". The notification display area 523 may display information other than the message, and may display only the word "coupon target commodity", for example. The display format when the display device 5 receives the display change instruction from the server device 4 is predetermined, and the display of the commodity name display area 521 and the commodity image display area 522 is set in accordance with the commodity code included in the display change instruction.

Returning to FIG. 10, the hardware of the display device 5 will be described.

The display unit 52 is a display device that includes, for example, a liquid crystal panel, and displays various types of information. For example, the display unit 52 displays advertisement information in a normal state. When the display device 5 receives a display change instruction from the server device 4, the display unit 52 displays a commodity information, a message, and the like as shown in FIG. 12.

The communication unit 53 is an interface circuit for communicating with an external device such as the server device 4 and the terminal device 6. The control unit 50 can control the communication unit 53 to transmit and receive information or data to and from the external device.

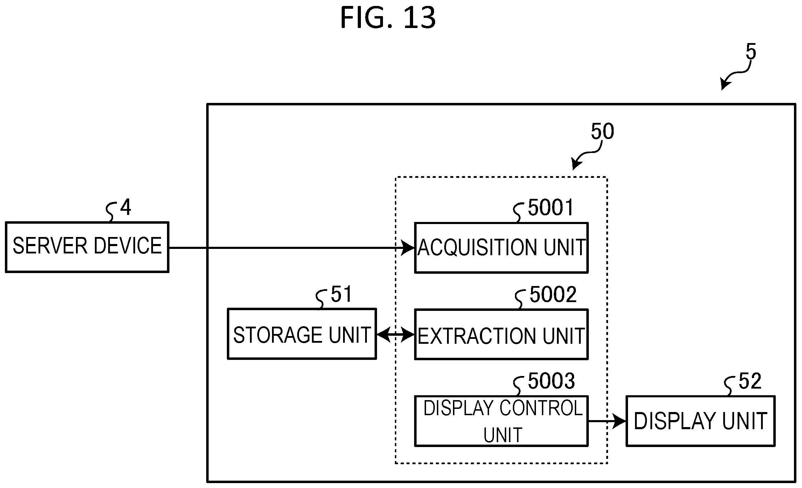

Next, the main functional configuration of the control unit 50 of the display device 5 will be described. FIG. 13 is a functional block diagram of the control unit 50 of the display device 5. The control unit 50 functions as an acquisition unit 5001, an extraction unit 5002, and a display control unit 5003 when the CPU 501 executes the control program stored in the ROM 502 or the storage unit 51. One or more of these functions may be performed by hardware such as a dedicated circuit.

The acquisition unit 5001 acquires a display change instruction from the server device 4. The display change instruction received by the acquisition unit 5001 includes a commodity code.

The extraction unit 5002 extracts display information from the commodity information management file 512. Specifically, the extraction unit 5002 extracts the commodity name and the commodity image corresponding to the commodity code included in the display change instruction from the commodity information management file 512.

When the acquisition unit 5001 acquires the display change instruction, the display control unit 5003 updates the screen displayed by the display unit 52. For example, the display control unit 5003 causes the display unit 52 to display advertisement information in a normal state, and in a case where the acquisition unit 5001 acquires a display change instruction, causes the display unit 52 to display a commodity name, a commodity image, a message, and the like as shown in FIG. 12.

Next, the terminal device 6 will be described.

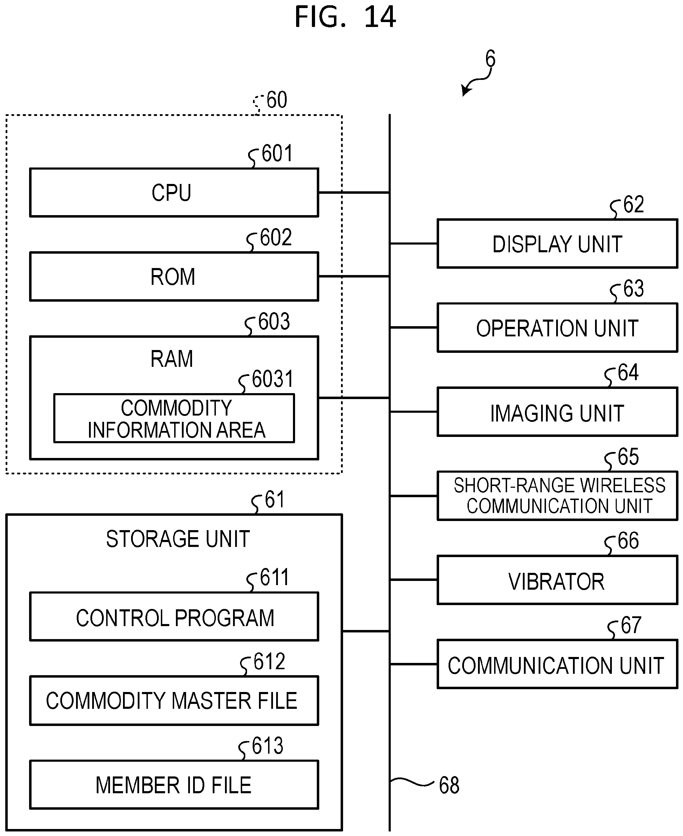

FIG. 14 is a hardware block diagram of the terminal device 6. The terminal device 6 includes a control unit 60, a storage unit 61, a display unit 62, an operation unit 63, an imaging unit 64, a short-range wireless communication unit 65, a vibrator 66, and a communication unit 67. The control unit 60, the storage unit 61, the display unit 62, the operation unit 63, the imaging unit 64, the short-range wireless communication unit 65, the vibrator 66, and the communication unit 67 are connected to each other via a bus 68 or the like.

The control unit 60 includes a CPU 601, a ROM 602, a RAM 603. The CPU 601, the ROM 602 and the RAM 603 are connected to each other via the bus 68.

The CPU 601 controls the entire operation of the terminal device 6. The ROM 602 stores various programs such as programs executed by the CPU 601 and various types of data. The RAM 603 is used as a work area of the CPU 601, and temporarily stores various programs and various data loaded from the ROM 602 and the storage unit 61. The control unit 60 or the CPU 601 executes various control processes of the terminal device 6 in accordance with a control program stored in the ROM 602 or the storage unit 61 and loaded onto the RAM 603.

Further, the RAM 603 includes a commodity information area 6031. The commodity information area 6031 stores commodity information of a commodity obtained by imaging the commodity bar code by the imaging unit 64. The commodity information stored in the commodity information area 6031 includes information such as a commodity code, a commodity name, a price, a number, and the coupon code of a used coupon. Commodity registration is executed by storing the commodity information in the commodity information area 6031.

The storage unit 61 is constituted by a storage medium such as an HDD or a flash memory, and maintains the stored data even if the power supply is cut off. The storage unit 61 stores a control program 611, a commodity master file 612, and a member ID file 613.

The control program 611 is a shopping application for realizing a function of executing commodity registration, a function of controlling the communication unit 67 to transmit the commodity information stored in the commodity information area 6031 and the member ID stored in the member ID file 613 to the checkout device 2 as checkout information in association with each other, a function of driving the vibrator 66 based on the vibration instruction received from the server device 4, and the like.

The commodity master file 612 is the copy of the commodity master file received from the server device 4. Since the commodity master file 612 is the same as the commodity master file 412 of the server device 4, a duplicate description thereof will be omitted. The member ID file 613 stores member ID of the owner of the terminal device 6.

The display unit 62 is a display device that includes, for example, a liquid crystal panel, and displays various types of information. For example, the display unit 62 displays the commodity information of the commodity registered. Further, the display unit 62 displays a registration screen or the like for manually registering a commodity to which any commodity bar code is not attached.

The operation unit 63 is a device for inputting information to the control unit 60, and includes a touch panel or the like provided on the surface of the display unit 62. For example, the operation unit 63 accepts an input of the commodity code of the commodity to which any commodity bar code is not attached to the control unit 60.

The imaging unit 64 is a camera that captures, for example, an image of a commodity bar code. The imaging unit 64 inputs imaging data of the commodity bar code to the control unit 60.

The short-range wireless communication unit 65 performs communication with the beacon device arranged in the store by short-range wireless communication. The short-range wireless communication unit 65 receives a beacon ID periodically transmitted by the beacon device.

The vibrator 66 is a vibration motor that generates vibration. The vibrator 66 starts an operation under the control of the control unit 60, and generates vibration for a predetermined time or until a stop instruction is input to the operation unit 63.

The communication unit 67 is an interface circuit for communicating with an external device such as the checkout device 2, the server device 4, and the display device 5. The control unit 60 can control the communication unit 67 to transmit and receive information or data to and from the external device.

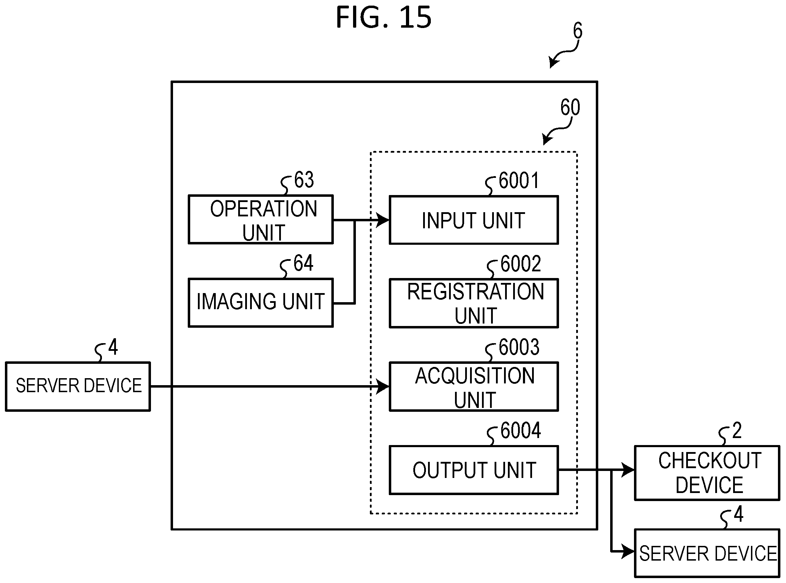

Next, the main functional configuration of the control unit 60 of the terminal device 6 will be described. FIG. 15 is a functional block diagram of the control unit 60 of the terminal device 6. The control unit 60 functions as an input unit 6001, a registration unit 6002, an acquisition unit 6003, and an output unit 6004 when the CPU 601 executes the control program stored in the ROM 602 or the storage unit 61. One or more of these functions may be configured by hardware such as a dedicated circuit.

Various kinds of information are input to the input unit 6001 from the operation unit 63 and the imaging unit 64. For example, a transaction start instruction, a checkout instruction, a commodity code, and the like are input from the operation unit 63 to the input unit 6001. The input unit 6001 acquires image data of the commodity bar code and the like from the imaging unit 64.

The registration unit 6002 executes commodity registration. Specifically, the registration unit 6002 analyzes the captured data of the commodity bar code input to the input unit 6001 and reads the commodity code. The registration unit 6002 reads, from the commodity master file 612, commodity information such as a commodity name and a price associated with the read commodity code. Then, the registration unit 6002 registers the read commodity information in the commodity information area 6031.

When the commodity code is read, the registration unit 6002 may issue an inquiry of the commodity information based on the commodity code to the server device 4 storing the commodity master file 412, and acquire the commodity information from the server device 4. In this case, the storage unit 61 does not need to store the commodity master file 612.

The acquisition unit 6003 acquires a beacon ID from the beacon device. Further, the acquisition unit 6003 acquires a vibration instruction from the server device 4.

When a checkout instruction is input to the input unit 6001, the output unit 6004 controls the communication unit 67 to transmit the checkout information to the checkout device 2. When the acquisition unit 6003 acquires the beacon ID, the output unit 6004 associates the beacon ID with the member ID stored in the member ID file 613, and controls the communication unit 67 to transmit the associated IDs to the server device 4.

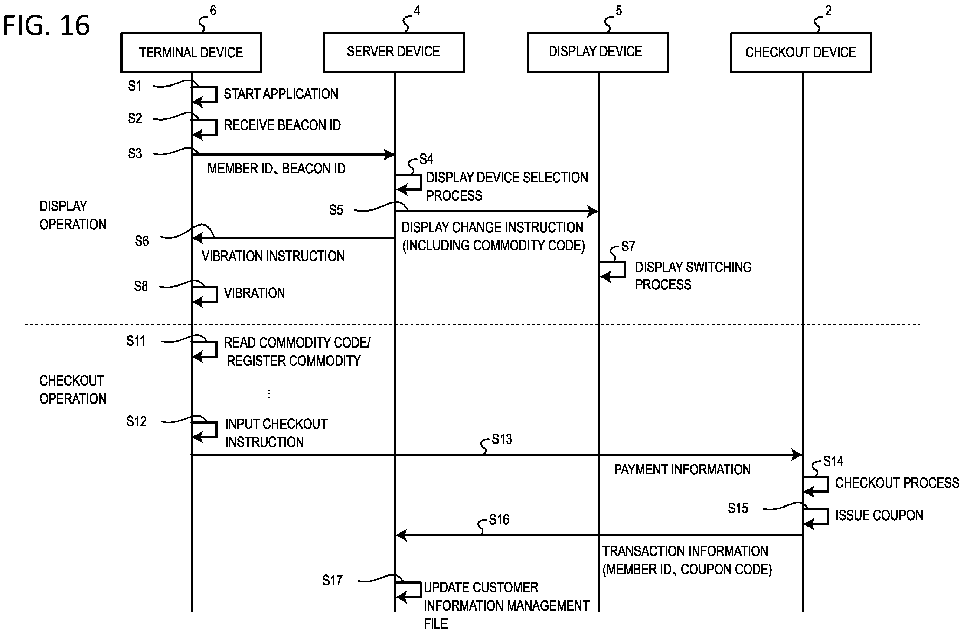

The operation of the store system 1 having the above configuration will be described. FIG. 16 is a sequence chart of operations of the store system 1. First, a display operation related to the update of the screen on the display device 5 will be described. In this example, the display of the display device 5 is switched in accordance with the movement of the customer C in the sales floor.

When a customer C shops in the store, the shopping application is executed on the terminal device 6 operated by the customer C (step S1). For example, the terminal device 6 activates the shopping application when an image of the two-dimensional code for entry confirmation displayed in the store is captured. When the customer C moves in the sales floor, the terminal device 6 receives a beacon ID from any of the beacon devices installed in the display areas (step S2). The terminal device 6 receives the beacon ID specifying the nearest beacon device. The terminal device 6 transmits the member ID stored in the terminal device 6 and the received beacon ID to the server device 4 in association with each other (step S3).

The server device 4 performs a display device selection process using the received member ID and beacon ID (step S4). The display device selection process is a process for selecting the display device 5 that changes the display content and performs the coupon target commodity notification. In other words, the display device selection process is a process of selecting the output destination of the display change instruction. Details of the display device selection process will be described later.

The server device 4 transmits the display change instruction to the display device 5 selected in the display device selection process (step S5). The display change instruction includes the commodity code specified in the display device selection process. In addition, the server device 4 transmits a vibration instruction to the terminal device 6 (step S6).

Upon receiving the display change instruction, the display device 5 executes the display switching process (step S7). The display switching process is a process for switching the display content by the display device 5. Details of the display switching process will be described later. Upon receiving the vibration instruction, the terminal device 6 drives the vibrator 66 (step S8).

By the above operation, it is possible to notify the customer C located in the display area of the coupon target commodity that the commodity displayed in the display area is the coupon target commodity.

Next, a checkout operation related to the checkout process in the store system 1 will be described.

When the terminal device 6 captures the commodity bar code while the shopping application is activated, the terminal device 6 reads the commodity code and executes commodity registration (step S11). The commodity registration is executed for all the commodities purchased by the customer C. When the customer C makes a payment, a checkout instruction is inputted to the terminal device 6 (step S12). When the checkout instruction is inputted, the terminal device 6 transmits the checkout information to the checkout device 2 (step S 13). At this time, the terminal device 6 clears the registration information registered in the commodity information area 6031.

The checkout device 2 executes a checkout process based on the received checkout information (step S14). The checkout process is a process for the customer C to pay the purchase price, and is a process related to cash payment, cashless payment, and the like. When the checkout process is completed, the checkout device 2 issues a coupon as needed (step S15). For example, the checkout device 2 issues a paper coupon as part of the receipt to be issued or separately from the receipt. The checkout device 2 transmits the transaction data to the server device 4 (step S16). The transaction information includes the member ID of the customer C who has conducted the transaction, the coupon code of the coupon used in the transaction, the coupon code of the issued coupon, and the like.

The server device 4 updates the customer information management file 415 based on the received transaction information (step S 17). The server device 4 updates the customer information management file 415 by rewriting the coupon code corresponding to the received member ID.

By the above operation, the customer C can shop using the terminal device 6, and the server device 4 can manage coupons available to the customer C. By managing coupons available to the customer C, the server device 4 can appropriately perform coupon target commodity notification using the display device 5 and the terminal device 6.

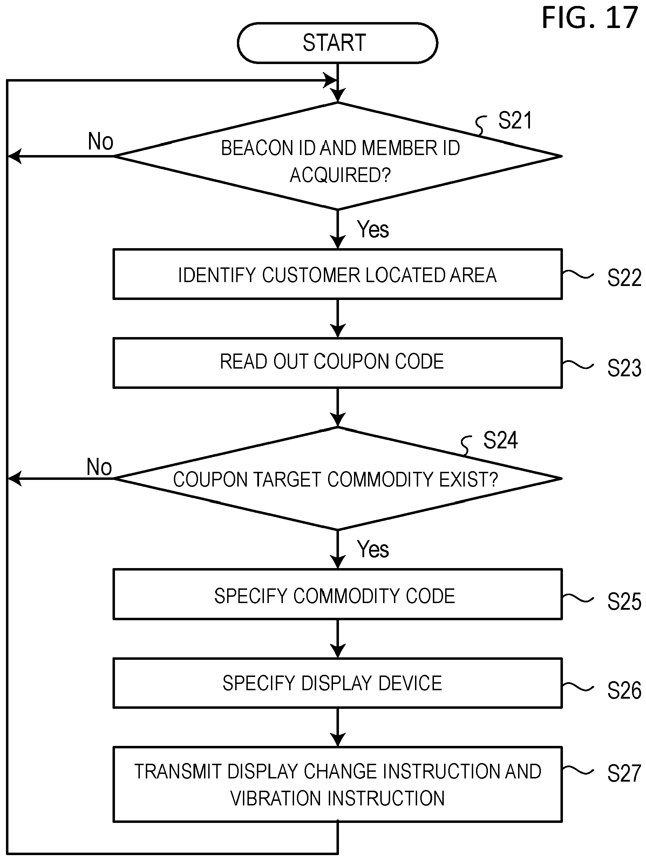

Next, a display device selection process executed by the server device 4 will be described. FIG. 17 is a flowchart of the display device selection process performed by the control unit 40 of the server device 4.

The control unit 40 determines whether the acquisition unit 4001 has acquires the member ID and the beacon ID from the terminal device 6 (step S21), and if not (No in step S21), returns to the process of step S21 and waits.

When the acquisition unit 4001 has acquired the member ID and the beacon ID (Yes in the step S21), the identification unit 4003 identifies the area in which the customers C locate (step S22). Specifically, the identification unit 4003 refers to the beacon management file 417 and specifies the area information corresponding to the beacon ID acquired by the acquisition unit 4001.

The information management unit 4002 reads out the coupon code available to the customer C of the member ID acquired by the acquisition unit 4001 (step S23). Specifically, the information management unit 4002 reads the coupon code corresponding to the member ID acquired by the acquisition unit 4001 from the customer information management file 415.

Next, the identification unit 4003 determines whether there is a coupon-target commodity in the display area in which the customer C is located (step S24). Specifically, the identification unit 4003 refers to the coupon master file 414 and determines whether the area information specified in the step S22 is included in the area information corresponding to the coupon code read in the step S23.

When there is no coupon target commodity in the display area where the customer C is located (No in step S24), the control unit 40 returns to the process of step S21. When there is a coupon target commodity in the display area in which the customer C is located (Yes in step S24), the identification unit 4003 specifies the commodity code of the coupon target commodity (step S25). Specifically, the identification unit 4003 refers to the coupon master file 414 and specifies the commodity code corresponding to the coupon code read in the step S23. Subsequently, the identification unit 4003 specifies the display device 5 to which the display change instruction is to be outputted (step S26). Specifically, the identification unit 4003 refers to the area management file 416 and identifies the display device code corresponding to the area information identified in the step S22.

The output unit 4004 controls the communication unit 44 to transmit the display change instruction to the display device 5 specified in the step S26, and transmit the vibration instruction to the terminal device 6 (step S27). Then, the control unit 40 returns to the process of the step S21. The process of step S27 corresponds to the process of step S5 and step S6 in the sequence chart of FIG. 16.

According to the display device selection process, the server device 4 can transmit a display change instruction to the display device 5 corresponding to the display area when there is a coupon target commodity in the display area in which the customer C is located. The display device 5 that has received the display change instruction can notify the customer C in the display area of the coupon target commodity.

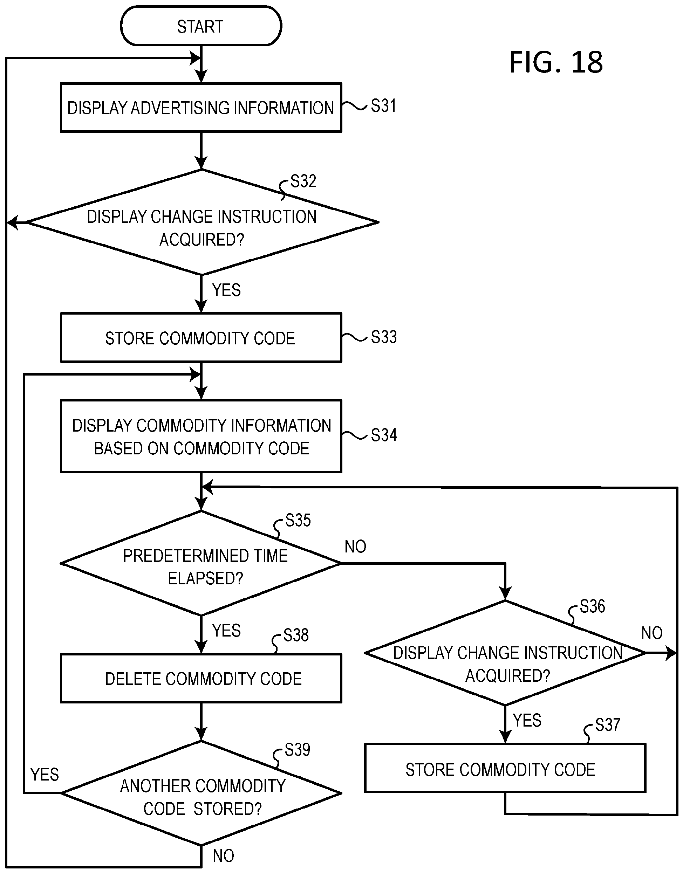

Next, a display switching process executed by the display device 5 will be described. FIG. 18 is a flowchart of a display switching process performed by the control unit 50 of the display device 5.

The display control unit 5003 causes the display unit 52 to display advertising information in a normal state (step S31). Next, the control unit 50 determines whether the acquisition unit 5001 has acquired a display change instruction from the server device 4 (step S32), and if not (No in step S32), returns to the process of step S31.

When the acquisition unit 5001 has acquired the display change instruction from the server device 4 (Yes in step S32), the control unit 50 stores the commodity code included in the display change instruction in the commodity code area 5031 (step S33). The display control unit 5003 causes the display unit 52 to display the information of the commodity based on the commodity code stored in the commodity code area 5031 (step S34). Specifically, the display control unit 5003 reads the commodity name and the commodity image corresponding to the commodity code stored in the commodity code area 5031 from the commodity information management file 512. Then, the display control unit 5003 causes the display unit 52 to display the read commodity name and commodity image in the display form shown in FIG. 12. With this display, the customer C is notified of the coupon target commodity.

Subsequently, the control unit 50 determines whether a predetermined time has elapsed (step S35). If the predetermined period has not elapsed (No in step S35), the control unit 50 determines whether the acquisition unit 5001 has acquired another display change instruction (step S36). The other display change instruction refers to a display change instruction including a commodity code different from the commodity code included in the display change process determined to have been acquired in the process of the step S32. In other words, in the process of the step S36, the control unit 50 determines whether an instruction to change the display of the coupon target commodity that is not the commodity in which the information is being displayed on the display unit 52 has been acquired.

When the acquisition unit 5001 has acquired another display change instruction (Yes in step S36), the control unit 50 stores the commodity code included in the other display change instruction in the commodity code area 5031 (step S37), and returns to the process of step S35. When the acquisition unit 5001 has not acquired another display change instruction (No in step S36), the control unit 50 skips the process of step S37 and returns to the process of step S35.

In the step S35 process, when the predetermined period of time has elapsed (Yes in the step S35), the control unit 50 deletes the commodity code of the coupon-target commodity for which the information has been displayed until then from the commodity code area 5031 (step S38). Then, the control unit 50 determines whether another commodity code is stored in the commodity code area 5031 (step S39). If another commodity code is not stored in the commodity code area 5031 (No in step S39), the control unit 50 returns to the process of step S31. If another commodity code is stored in the commodity code area 5031 (Yes in step S39), the control unit 50 returns to the process of step S34. Then, the display control unit 5003 causes the display unit 52 to display the information of the commodity based on the other commodity code stored in the commodity code area 5031.

By the display switching process, when a display change instruction is received, the display device 5 can display information indicating that the commodity of the commodity code included in the display change instruction is the coupon target commodity and perform the coupon target commodity notification. Further, when the display device 5 receives another display change instruction for a commodity different from the commodity relating to the current coupon target commodity notification, it is possible to perform another coupon target commodity notification for the different commodity after the current coupon target commodity notification.

As described above, the server device 4 of the first embodiment is capable of communicating with the plurality of display devices 5 provided in the store in association with the display areas for displaying the corresponding commodities, and includes: an acquisition unit 4001 that acquires a member ID for identifying the customer C and a beacon ID indicating the position of the customer C; an information management unit 4002 that selects a coupon available to the customer C identified by the member ID acquired by the acquisition unit 4001; and an identification unit 4003 that specifies a display device for changing the display content among the plurality of display devices 5 based on the beacon ID acquired by the acquisition unit 4001 and the area information indicating the display area of the target commodity of the coupon selected by the information management unit 4002.

Accordingly, when there is a coupon target commodity in the display area in which the customer C is located, the server device 4 can transmit a display change instruction to the display device 5 that displays the coupon target commodity to the customer C in the display area.

The server device 4 of the first embodiment further includes an output unit 4004 that controls the communication unit 44 to output a display change instruction instructing the display device 5 specified by the identification unit 4003 to change the display content.

Accordingly, the server device 4 can cause the display device 5 to perform the coupon target commodity notification by outputting a display change instruction to the display device 5.

Further, in the server device 4 of the first embodiment, the acquisition unit 4001 acquires the member ID and the beacon ID from the terminal device 6 that moves together with the customer C, and the output unit 4004 controls the communication unit 44 to output, to the terminal device 6, the information indicating that the display device 5 has been specified by the identification unit 4003.

As a result, the terminal device 6 can perform the coupon target commodity notification by generating vibration or the like. In other words, the server device 4 can cause the terminal device 6 to perform the coupon target commodity notification by outputting information indicating that the display device 5 has been specified by the identification unit 4003 to the terminal device 6.

### Second Embodiment

Next, a second embodiment will be described. The second embodiment is different from the first embodiment in that the display device 5 receives a coupon code from the terminal device 6 and executes a display switching process based on the received coupon code. Hereinafter, description of the same configurations and functions as those of the first embodiment will be omitted in some cases. The following description is intended to avoid unnecessary redundancy and to facilitate understanding by those skilled in the art.

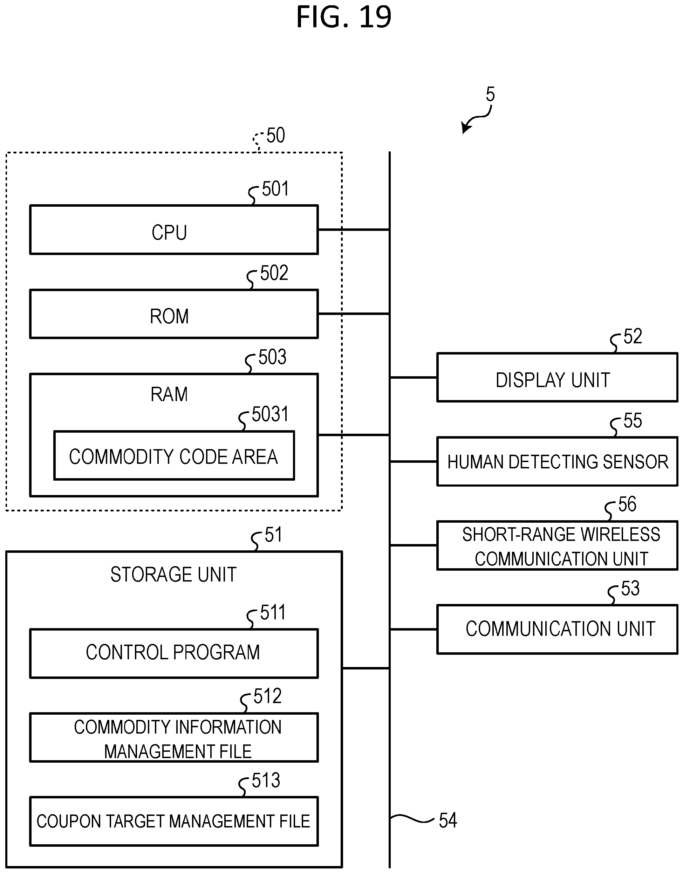

FIG. 19 is a hardware block diagram of the display device 5 according to the second embodiment. The display device 5 includes a human detecting sensor 55 and a short-range wireless communication unit 56 in addition to the control unit 50, the storage unit 51, the display unit 52, and the communication unit 53. The human detecting sensor 55 and the short-range wireless communication unit 56 are connected to other hardware via the bus 54 or the like.

The storage unit 51 stores a coupon target management file 513 in addition to the control program 511 and the commodity information management file 512.

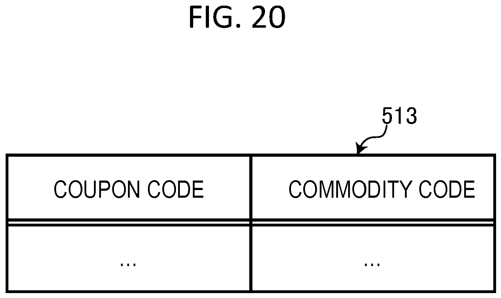

The coupon target management file 513 manages coupon target information in which a coupon code and a commodity code are associated with each other. The information registered in the coupon target management file 513 is set according to the commodity displayed in each display area associated with the corresponding display device 5. FIG. 20 depicts a data structure of the coupon target management file 513. The coupon target management file 513 stores one or more coupon codes and commodity codes in association with each other.

The coupon code is information for specifying a coupon related to the commodity displayed in the display area corresponding to the display device 5. The commodity code identifies the displayed commodity in the display area.

When detecting a person (i.e., a customer C) located within a predetermined range, the human detecting sensor 55 outputs a detection signal to the control unit 50. As the human detecting sensor 55, for example, a well-known sensor such as one using infrared rays is used. The range in which the human detecting sensor 55 can detect the customer C is set to a range in which the short-range wireless communication unit 56 can communicate with the terminal device 6.

The short-range wireless communication unit 56 performs communication with the terminal device 6 by short-range wireless communication. When the human detecting sensor 55 detects the customer C, the short-range wireless communication unit 56 outputs a coupon code request. In other words, when the customer C is located in the communicable range, the short-range wireless communication unit 56 outputs a coupon code request to the terminal device 6 possessed by the customer C. Any communicable range can be set. Further, the short-range wireless communication unit 56 receives the coupon code from the terminal device 6.

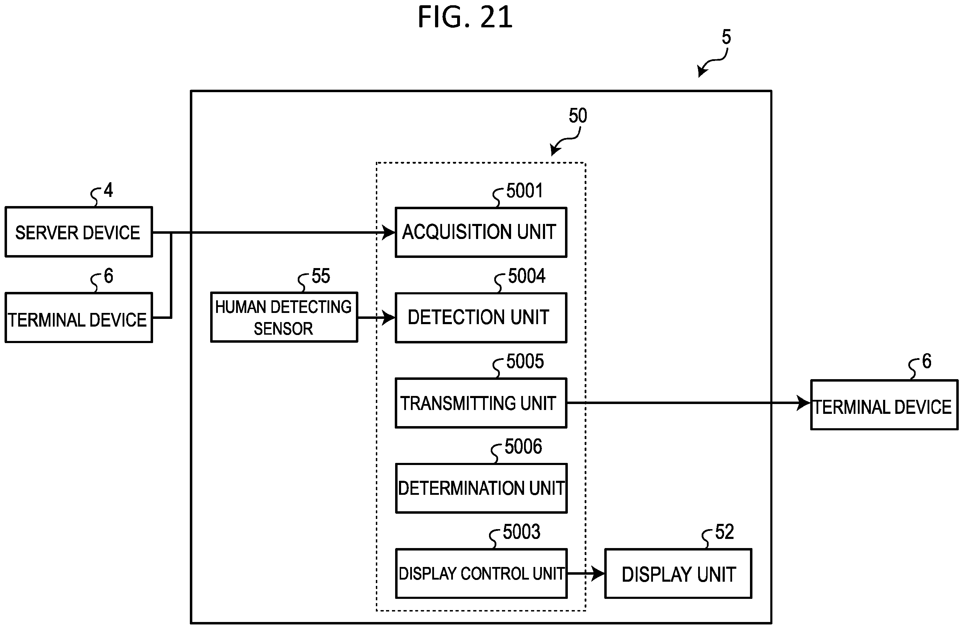

Next, the main functional configuration of the control unit 50 of the display device 5 will be described. FIG. 21 is a functional block diagram of the control unit 50 of the display device 5. The control unit 50 functions as an acquisition unit 5001, a display control unit 5003, a detection unit 5004, a transmitting unit 5005, and a determination unit 5006 when the CPU 501 executes a control program stored in the ROM 502 or the storage unit 51. One or more of these functions may be performed by hardware such as a dedicated circuit.

The acquisition unit 5001 acquires the coupon target information stored in the coupon target management file 513 from the server device 4. The coupon target information acquired by the acquisition unit 5001 is related to a commodity corresponding to each display device 5. The coupon code included in the coupon target information acquired by the acquisition unit 5001 from the server device 4 is referred to as the target coupon identification information.

Further, the acquisition unit 5001 acquires a coupon code from the terminal device 6 via the short-range wireless communication unit 56. That is, the acquisition unit 5001 acquires a coupon code for identifying a coupon available to a customer C who operates the terminal device 6 located within a predetermined range from the display device 5. The coupon code received by the receiving unit 5001 from the terminal device 6 is referred to as the acquired coupon identification information.

The detection unit 5004 detects the customer C within the predetermined range. The detection unit 5004 detects the customer C based on a detection signal from the human detecting sensor 55.

When the detection unit 5004 detects the customer C, the transmitting unit 5005 controls the communication unit 56 to output a coupon code request by short-range wireless communication.

The determination unit 5006 determines whether the acquired coupon identification information acquired by the acquisition unit 5001 matches the target coupon identification information targeted for the commodity associated with the display device 5. Specifically, the determination unit 5006 determines whether the coupon code acquired from the terminal device 6 by the acquisition unit 5001 is stored in the coupon target management file 513.

The display control unit 5003 switches the display of the display unit 52 according to the determination result of the determination unit 5006. For example, the display control unit 5003 normally causes the display unit 52 to display advertisement information, and when the coupon code acquired from the terminal device 6 by the determination unit 5006 is stored in the coupon target management file 513, causes the display unit 52 to display information indicating that the commodity corresponding to the coupon code is the coupon target commodity.

Next, the terminal device 6 will be described.

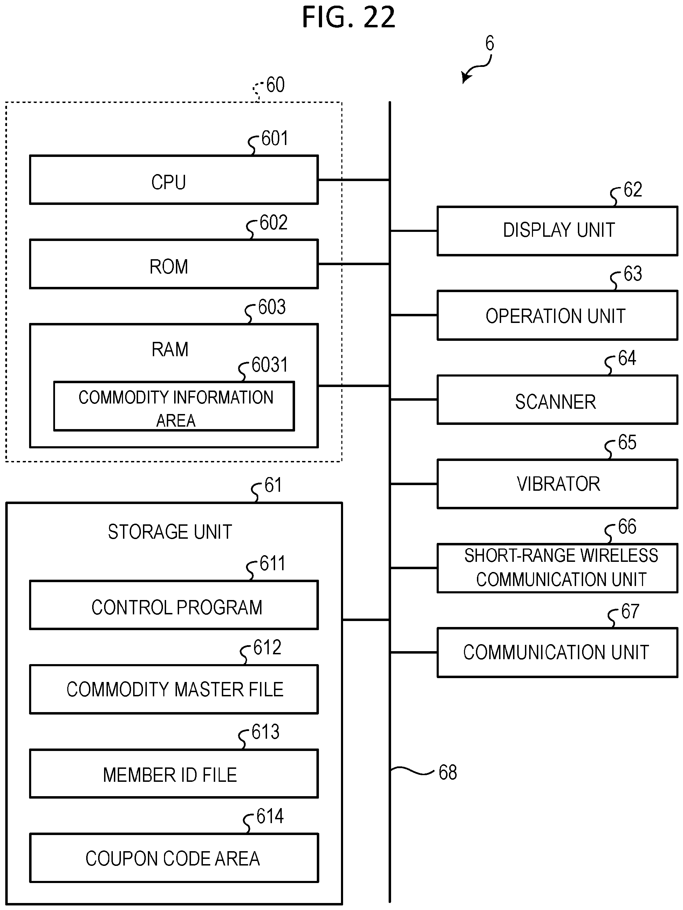

FIG. 22 is a hardware block diagram of the terminal device 6 according to the second embodiment. The storage unit 61 of the terminal device 6 includes a coupon code area 614 in addition to the information stored in the storage unit 61 of the first embodiment.

The coupon code area 614 stores a coupon code available to the customer C who operates the terminal device 6. The coupon code stored in the coupon code area 614 is received from the server device 4. Other hardware configurations of the terminal device 6 are the same as those of the first embodiment.

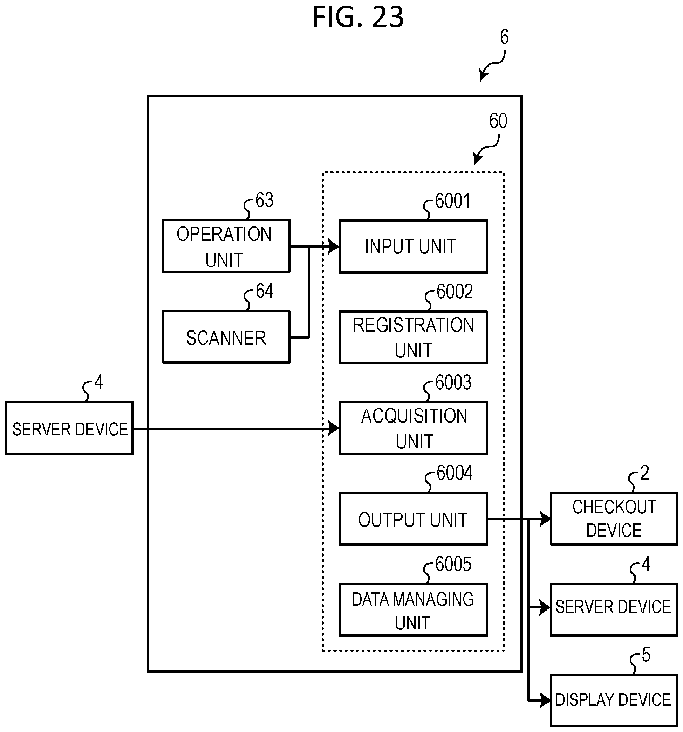

Next, the main functional configuration of the control unit 60 of the terminal device 6 will be described. FIG. 23 is a functional block diagram of the control unit 60 of the terminal device 6. The control unit 60 functions as a data managing unit 6005 in addition to the input unit 6001, the registration unit 6002, the acquisition unit 6003, and the output unit 6004 when the CPU 601 executes a control program stored in the ROM 602 or the storage unit 61. One or more of these functions may be performed by hardware such as a dedicated circuit.

The functions of the input unit 6001 and the registration unit 6002 are the same as those of the first embodiment.

The acquisition unit 6003 acquires a coupon code from the server device 4. The acquired coupon code corresponds to the member ID of the customer C stored in the member ID file 613 in the customer information management file 415 of the server device 4. In other words, the coupon code to be acquired is a coupon code of a coupon available to the customer C who operates the terminal device 6. Further, the acquisition unit 6003 acquires a coupon code request from the display device 5 via the short-range wireless communication unit 65.

When the acquisition unit 6003 acquires the coupon code request, the output unit 6004 controls the communication unit 67 to output the coupon code by short-range wireless communication.

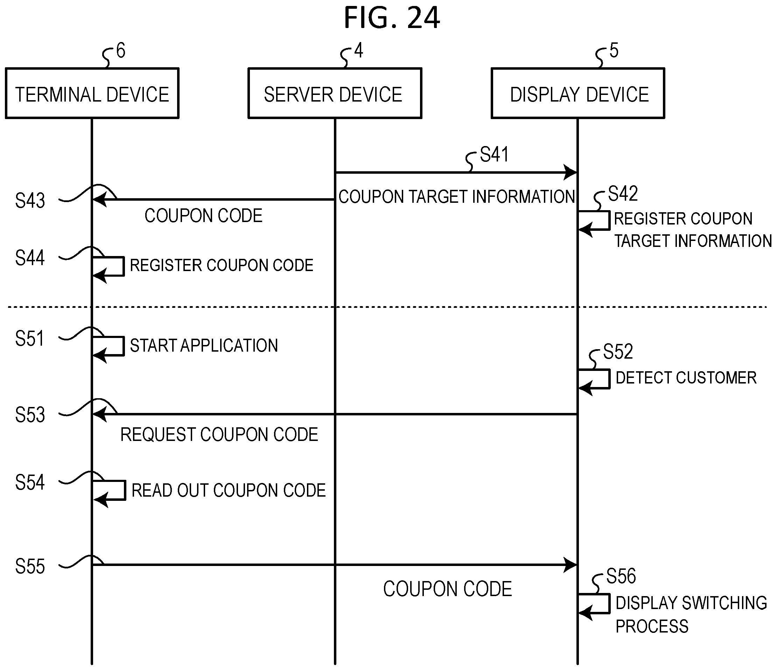

The operation of the store system 1 according to the second embodiment will be described. FIG. 24 is a sequence chart illustrating operations of the store system 1. First, an information transmission operation by the server device 4 will be described.

The server device 4 transmits coupon target information to the display device 5 (step S41). The server device 4 transmits the coupon target information including the commodity code of the commodity corresponding to the display device 5 and the coupon code corresponding to the commodity code to the display device 5.

For example, the server device 4 transmits the coupon target information to the display device 5 of the code 01 in the following manner. The server device 4 extracts the area information 1-1 and 1-2 corresponding to the code 01 from the area management file 416. Next, the server device 4 extracts the coupon target information including all the coupon codes corresponding to the area information 1-1 and 1-2 and the commodity code corresponding to the coupon code from the coupon master file 414. Then, the server device 4 transmits the extracted coupon target information to the display device 5 of the code 01. The server device 4 similarly transmits coupon target information to other display devices 5. The server device 4 transmits the coupon target information to each of the display devices 5 periodically or when there is a change in the commodity displayed in the display area.

The displaying device 5 registers the received coupon target information (step S42). Specifically, the display device 5 registers the received coupon target information in the coupon target management file 513.

In addition, the server device 4 transmits a coupon code to the terminal device 6 (step S43). The server device 4 extracts the coupon code corresponding to the member ID from the customer information management file 415. The server device 4 reads the contact address corresponding to the member ID from the customer master file 413. Then, the server device 4 transmits the extracted coupon code using the read contact address as a transmission destination. The server device 4 transmits the coupon code to the terminal device 6 at a predetermined timing, for example, at a timing when the terminal device 6 receives a coupon code request from the terminal device 6 when the shopping application is activated.

The terminal device 6 registers the received coupon code (step S44). Specifically, the terminal device 6 registers the received coupon code in the coupon code area 614.

Next, an operation related to switching of the display of the display device 5 will be described. Here, the display of the display device 5 is switched in accordance with the movement of the customer C in the sales floor.

When the customer C shops in the store, the shopping application is executed on the terminal device 6 operated by the customer C (step S51). When the customer C moves in the store and approaches any of the display devices 5, the display device 5 detects the customer C (step S52). The display device 5 outputs a coupon code request by short-range wireless communication (step S53).

The terminal device 6 carried by the customer C approaching the display device 5 receives the coupon code request. The terminal device 6 reads out the coupon code from the coupon code area 614 (step S54). The terminal device 6 outputs the read coupon code by short-range wireless communication (step S55).

When receiving the coupon code outputted by the terminal device 6, the display device 5 executes a display switching process (step S56). Details of the display switching process will be described later.

With the above-described operation, the display device 5 can appropriately notify the customer C who moves in the sales floor of the coupon target commodity.

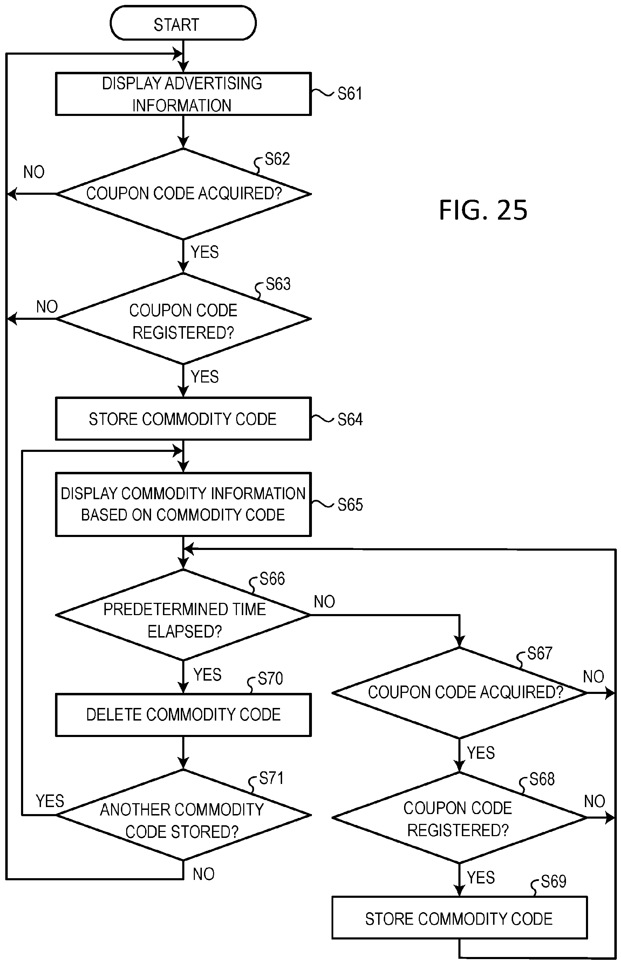

Next, a display switching process executed by the display device 5 will be described. FIG. 25 is a flowchart of a display switching process performed by the control unit 50 of the display device 5.

The display control unit 5003 causes the display unit 52 to display advertising information in a normal state (step S61). Next, the control unit 50 determines whether the acquisition unit 5001 has acquired a coupon code from the terminal device 6 (step S62), and returns to the process of step S61 if any coupon code has not been acquired (No in step S62).

When the acquisition unit 5001 has acquired a coupon code from the server device 4 (Yes in step S62), the determination unit 5006 determines whether the acquired coupon code is registered in the coupon target management file 513 (step S63). If not registered (No in step S63), the control unit 50 returns to the process of step S61. In this case, the control unit 50 determines that the customer C in the vicinity of the display device 5 does not have the coupon related to the commodity corresponding to the display device 5, and causes the display of the advertisement information to continue.

When the coupon code acquired by the acquisition unit 5001 is registered in the coupon target management file 513 (Yes in step S63), the control unit 50 reads the commodity code corresponding to the received coupon code from the coupon target management file 513 and stores the commodity code in the commodity code area 5031 (step S64). In other words, the control unit 50 stores, in the commodity code area 5031, the commodity code of the coupon target commodity of the coupon held by the customer C in the vicinity of the display device 5.

The display control unit 5003 causes the display unit 52 to display the information of the commodity based on the commodity code stored in the commodity code area 5031 (step S65). In the same manner as in the first embodiment, the display control unit 5003 causes the display unit 52 to display the commodity information in the display form illustrated in FIG. 12. With this display, the customer C is notified of the coupon target commodity.

Subsequently, the control unit 50 determines whether a predetermined period of time has elapsed (step S66). If the predetermined period has not elapsed (No in the step S66), the control unit 50 determines whether the acquisition unit 5001 has acquired a different coupon code (step S67). If not received (No in step S67), the control unit 50 returns to the process of step S66.

When the acquisition unit 5001 has acquired a different-coupon code (Yes in step S67), the determination unit 5006 determines whether the acquired different coupon code is registered in the coupon target management file 513 (step S68). If not registered (No in step S68), the control unit 50 returns to the process of step S66. If registered (Yes in step S68), the control unit 50 reads the commodity code corresponding to the acquired coupon code from the coupon target management file 513 and stores the commodity code in the commodity code area 5031 (step S69). Then, the control unit 50 returns to the process of the step S66.

In the step S66 process, when a predetermined period of time has elapsed (Yes in the step S66), the control unit 50 deletes the commodity code of the coupon target commodity for which the information has been displayed from the commodity code area 5031 (step S70). Then, the control unit 50 determines whether another commodity code is stored in the commodity code area 5031 (step S71). If another commodity code is not stored in the commodity code area 5031 (No in step S71), the control unit 50 returns to the process of step S61. If another commodity code is stored in the commodity code area 5031 (Yes in step S71), the control unit 50 returns to the process of step S65. Then, the display control unit 5003 causes the display unit 52 to display the information of the commodity based on the commodity code stored in the commodity code area 5031.

By the display switching process, the display device 5 can perform the coupon target commodity notification based on the coupon code received from the terminal device 6 located near the display device.

As described above, the display device 5 according to the second embodiment is provided in the store corresponding to a commodity to be displayed, and includes: an acquisition unit 5001 for acquiring a coupon code for identifying a coupon that is available to a customer C operating a terminal device 6 located within a predetermined range from the display device 5, a determination unit for determining whether the coupon code acquired by the acquisition unit 5001 coincides with the coupon code for the commodity corresponding to the display device 5, and a display control unit 5003 for switching the display of the display unit 52 when the acquired coupon code coincides with the coupon code associated with the display device 5.

As a result, when the customer C who has approached the display device 5 has a coupon for the commodity corresponding to the display device 5, the display device 5 can notify the customer C of the coupon target commodity.

In each of the above-described embodiments, the control programs executed by the server device 4, the display device 5, and the terminal device 6 may be stored in and installed from a non-transitory computer readable recording medium such as a CD-ROM. Further, the control program executed by each device of each of the above-described embodiments may be stored in a computer connected to a network such as the Internet, and may be downloaded via the network.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims and their equivalents are intended to cover such forms or modifications as would fall within the scope of the disclosure.

## Claims

1. A display system for displaying commodity information for a customer in a store, comprising:
a plurality of display devices (5) installed in the store and each associated with one of a plurality of areas in which commodities are displayed for purchase; and
a server device including:
a communication interface configured to communicate with the display devices and a terminal device operated by a customer in the store,
a memory that stores:
commodity codes of commodities, each in association with any coupon applicable to the corresponding commodity, and
customer IDs of customers of the store, each in association with any coupon that has been issued thereto, and
a processor configured to:
acquire a first customer ID and first information from a first terminal device, the first information indicating a current position of the first terminal device in the store,
determine a first area corresponding to the current position of the first terminal device,
determine that a first coupon is associated with the first customer ID and applicable to a first commodity displayed in the first area, and
control the communication interface to transmit to a first display device associated with the first area, a first command indicating the first commodity, wherein the first command causes the first display device to display first commodity information related to the first commodity.

2. The display system according to claim 1, wherein the first command causes the first display device to further display a message indicating that a coupon is usable.

3. The display system according to claim 1 or 2, wherein the first commodity information includes a commodity name and a commodity image of the first commodity.

4. The display system according to any one of claims 1 to 3, wherein each of the display devices is configured to display an advertisement during a time period just prior to receiving the first command from the server device.

5. The display system according to any one of claims 1 to 4, wherein the processor is configured to, when the first command is transmitted, control the communication interface to transmit to the first terminal device a second command that causes the first terminal device to vibrate.

6. The display system according to any one of claims 1 to 5, wherein the terminal device is mounted on a shopping cart.

7. The display system according to any one of claims 1 to 6, further comprising:
a plurality of beacon devices installed in the store and each broadcasting a beacon signal indicating a beacon ID associated with one of the areas, and
the first information acquired from the first terminal device includes the beacon ID.

8. A server device comprised in a display system for displaying commodity information for a customer in a store, the system further comprising a plurality of display devices, the server device being for managing commodity information displayed by the plurality of display devices, comprising:
a communication interface configured to communicate with:
the display devices each associated with one of a plurality of areas in which commodities are displayed for purchase, and
a terminal device operated by a customer in the store;
a memory that stores:
commodity codes of commodities, each in association with any coupon applicable to the corresponding commodity, and
customer IDs of customers of the store, each in association with any coupon that has been issued thereto; and
a processor configured to:
acquire a first customer ID and first information from a first terminal device, the first information indicating a current position of the first terminal device in the store,
determine a first area corresponding to the current position of the first terminal device,
determine that a first coupon is associated with the first customer ID and applicable to a first commodity displayed in the first area, and
control the communication interface to transmit to a first display device associated with the first area a first command indicating the first commodity, wherein the first command causes the first display device to display first commodity information related to the first commodity.

9. The server device according to claim 8, wherein the first command causes the first display device to further display a message indicating that a coupon is usable.

10. The server device according to claim 8 or 9, wherein the first commodity information includes a commodity name and a commodity image of the first commodity.

11. The server device according to any one of claims 8 to 10, wherein each of the display devices is configured to display an advertisement during a time period just prior to receiving a first command from the server device.

12. The server device according to any one of claims 8 to 11, wherein the processor is configured to, when the first command is transmitted, control the communication interface to transmit to the first terminal device a second command that causes the first terminal device to vibrate.

13. The server device according to any one of claims 8 to 12, wherein the terminal device is mounted on a shopping cart.

14. The server device according to any one of claims 8 to 13, further comprising:
a plurality of beacon devices installed in the store and each broadcasting a beacon signal indicating a beacon ID associated with one of the areas, and
the first information acquired from the first terminal device includes the beacon ID.

15. A display device comprised in a display system for displaying commodity information for a customer in a store, the display device being for displaying commodity information for a customer in an area of the store, comprising:
a communication interface configured to communicate with a terminal device operated by a customer in the store and present within a predetermined range;
a memory that stores a commodity code of a commodity displayed in the area in association with a coupon applicable to the commodity;
a display; and
a processor configured to:
detect a first terminal device within the predetermined range,
acquire a first coupon code of a first coupon from the first terminal device,
determine whether the first coupon is associated with the commodity displayed in the area,
upon determining that the first coupon is associated with the commodity displayed in the area, control the display to display commodity information related to the commodity displayed in the area.
